# FASCICULE DE BREVET EUROPEEN

(11) **EP 1 219 866 B1**
(45) Date de publication et mention de la délivrance du brevet: **17.03.2004**
(21) Numéro de dépôt: 01403325.2
(22) Date de dépôt: 20.12.2001
(51) Int. Cl.: F16H 59/70

(54) **Dispositif permettant de déterminer le sens de roulage sélectionné d'un véhicule automobile**
Vorrichtung zum Feststellen der gewählten Fahrtrichtung eines Kraftfahrzeuges
Device to detect selected vehicle travel direction

(30) Priorité: 28.12.2000 FR 0017214
(43) Date de publication de la demande: 03.07.2002
(73) Titulaire: Peugeot Citroen Automobiles SA, 92200 Neuilly sur Seine (FR)
(72) Inventeur: Damey, Walter, 93140 Bondy (FR); Lefevre, Fabrice, 60240 Bouconvillers (FR)
(74) Mandataire: Thinat, Michel

(56) Documents cités:
- DE-A- 4 427 330
- DE-C- 4 038 998
- FR-A- 2 728 647

## Description

La présente invention concerne un dispositif selon le préambule de la revendication 1. Un tel dispositif est connu de DE 40 38 998.

On connaît par le document FR-A-2 728 647 un dispositif permettant de détecter la position de sélection réglée dans une boîte de vitesses de véhicule automobile en utilisant deux potentiomètres liés mécaniquement au levier de sélection de la boîte de vitesses. On connaît également par le document FR-A-2 723 417 un dispositif de détermination du rapport engagé sur une boîte de vitesses mécanique à partir de la position d'un levier de changement de vitesses et utilisant des contacteurs électromécaniques actionnés par un contact mécanique direct de ceux-ci avec le levier de changement de vitesses de façon à connaître avec précision la position réglée de la boîte de vitesses.

Ces dispositifs connus ont pour inconvénients d'être relativement complexes tant du point de vue mécanique qu'électrique et nécessitent généralement une modification de la structure de la boîte de vitesses et / ou de sa timonerie de commande.

La présente invention a pour but d'éliminer les inconvénients ci-dessus en proposant un dispositif selon la revendication 1.

Le dispositif comprend un contacteur de feu de recul du véhicule présent sur la boîte de vitesses et relié au circuit électronique de façon que ce dernier puisse fournir un signal d'information indiquant que le rapport engagé sur la boîte de vitesses est du type marche avant ou marche arrière suivant l'état du contacteur du feu de recul lorsque le récepteur reçoit le faisceau infrarouge.

Le circuit électronique est également apte à fournir un signal d'information indiquant un défaut de fonctionnement de l'émetteur ou du récepteur infrarouge ou du contacteur du feu de recule lorsque le circuit électronique ne reçoit pas de signal de récepteur infrarouge et constate que le contacteur est actionné.

Avantageusement, l'émetteur et le récepteur infrarouge sont fixés à des supports solidaires d'un boîtier de réception de la partie inférieure d'articulation de levier de changement de vitesses de façon à être disposés en alignement en regard l'un de l'autre suivant un axe situé dans un plan contenant l'axe du levier lorsque ce dernier occupe sa position de sélection neutre.

De préférence, le circuit électronique est un calculateur de bord du véhicule.

L'invention sera mieux comprise, et d'autre buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- La figure 1 est vue en perspective du dispositif de l'invention permettant de déterminer le sens de roulage sélectionné d'un véhicule automobile ;
- La figure 2 représente une grille de passage et de sélection de vitesses ;
- La figure 3 est une vue de face suivant la flèche III du dispositif de la figure 1 ;
- La figure 4 est une vue en coupe suivant la ligne IV-IV de la figure 1 ; et
- La figure 5 est une vue en coupe semblable à celle de la figure 4 et représentant le levier de changement de vitesse à une position de sélection de passage d'une vitesse.

En se reportant aux figures, la référence 1 désigne un levier de changement de vitesses monté pivotant dans un boîtier 2, dont seule la paroi supérieure 2a est représentée, par l'intermédiaire d'une articulation à rotule (non représentée) solidaire de la partie inférieure de la tige droite 3 du levier 1 et retenue dans un logement du boîtier 2. Ce dernier est fixé à une partie formant tunnel (non représentée) du véhicule.

La boîte de vitesses du véhicule peut être réglée par le levier de changement de vitesses actionné manuellement, dans une position de sélection neutre à laquelle un arbre de sortie de la boîte de vitesses est désacouplé de l'arbre d'entrée de celle-ci et à plusieurs positions de sélection de fonctionnement en marche avant et arrière du véhicule auxquelles l'arbre de sortie est accouplé à l'arbre d'entrée de la boîte de vitesses selon des rapports de transmission de vitesses de rotation associés individuellement aux positions de sélection de fonctionnement en marche.

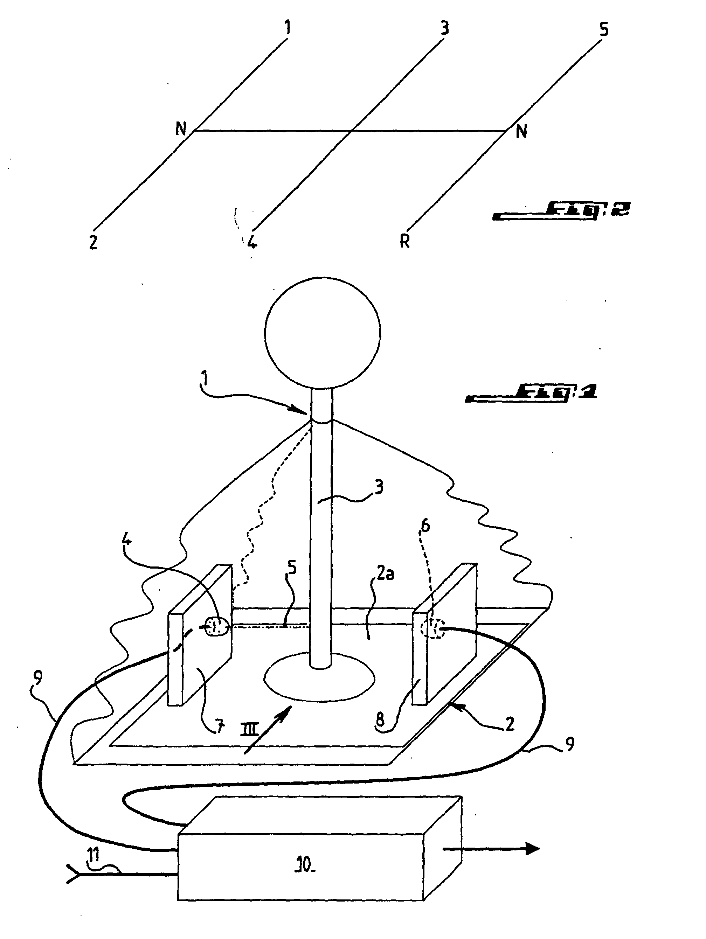

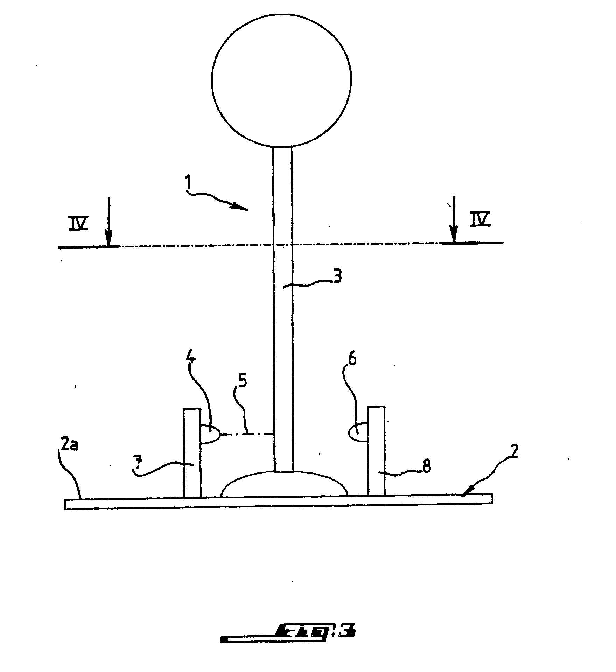

La figure 2 représente une grille de sélection et de passage de vitesses pour une boîte de vitesses comportant cinq rapports de marche avant 1-5 et un rapport de marche arrière R engagés par les déplacements correspondants du levier 1 à partir de sa position de sélection neutre N. Bien entendu, l'invention n'est pas limitée à une telle grille de sélection de passage de vitesses.

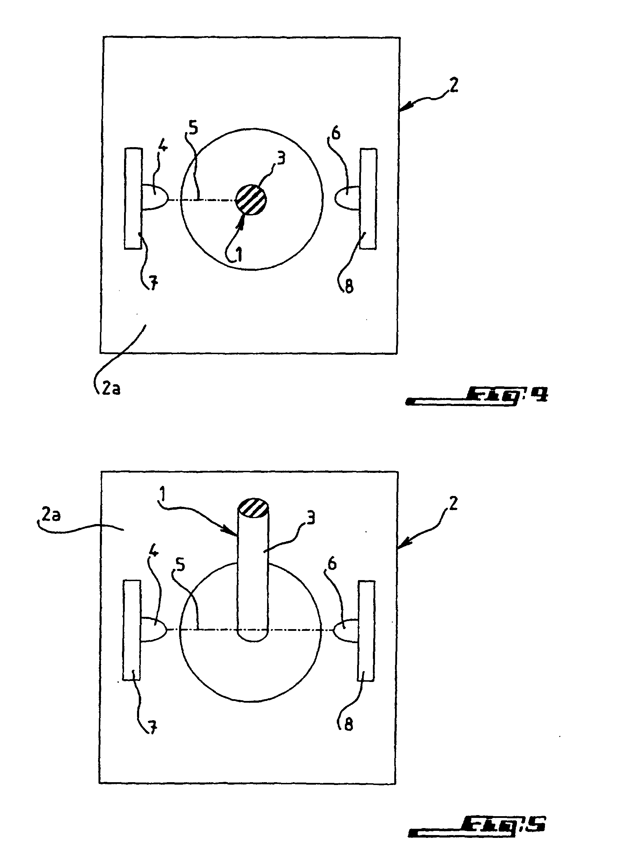

Le dispositif de l'invention permettant de déterminer le sens de roulage sélectionné d'un véhicule automobile comprend un émetteur 4, tel que par exemple une diode du type LED, d'émission d'un faisceau infrarouge 5 et un récepteur 6, tel qu'une photodiode, de réception du faisceau infrarouge 5 émis par l'émetteur 4, ce dernier et le récepteur 6 étant disposés relativement au levier de changement de vitesses 1 de façon que la réception du faisceau infrarouge par le récepteur 6 soit interrompue par la tige 3 du levier en position de sélection neutre de celui-ci représentée aux figures 1, 3 et 4 alors que le récepteur 6 reçoit le faisceau infrarouge 5 de l'émetteur 4 à toute autre position de la tige 3 du levier 1 correspondant à une sélection de fonctionnement en marche avant ou arrière du véhicule, c'est-à-dire à un rapport engagé correspondant sur la boîte de vitesses, comme représenté en figure 5.

Comme représenté, l'émetteur 4 est solidaire d'une plaque de support 7 fixée sur la paroi supérieure 2a perpendiculairement à cette dernière, tandis que le récepteur 6 est solidaire d'une autre plaque de support 8 fixée sur la paroi 2a perpendiculairement à celle-ci, les deux parois 7, 8 étant parallèles au plan vertical contenant l'axe de la tige 3 en position de sélection neutre du levier 1. Ainsi, l'émetteur 4 se trouve en alignement avec le récepteur 6 suivant un axe du faisceau infrarouge 5 perpendiculaire au plan vertical contenant l'axe de la tige 3 du levier 1 en position de sélection neutre de ce levier.

L'émetteur 4 et le récepteur 6 sont reliés par l'intermédiaire de deux conducteurs électriques 9 à un circuit électronique contenu dans un boîtier 10 de façon à commander l'émetteur 4 pour qu'il fournisse le rayonnement infrarouge 5 et recevoir du récepteur 6 un signal dont l'état indique si ce récepteur reçoit ou non le rayonnement infrarouge provenant de l'émetteur 4.

Le circuit électronique est relié par un conducteur 11 à un contacteur de feu de recul du véhicule présent sur la boîte de vitesses comme cela est connu en soi. Ainsi, le contacteur peut fournir au circuit électronique un signal indiquant que le contacteur est actionné lorsque le rapport de vitesse engagé est la marche arrière.

Le fonctionnement du dispositif ressort déjà de la description qui en a été faite ci-dessus et va être maintenant expliqué.

Lorsque le levier de changement de vitesses 1 occupe sa position de sélection neutre, sa tige verticale 3 interrompt la transmission du faisceau infrarouge 5 de l'émetteur 4 vers le récepteur 6 dont la sortie ne fournit alors aucun signal au circuit électronique logé dans le boîtier 10. Le circuit électronique fournit alors un signal d'information indiquant que le levier de changement de vitesses est en position de sélection neutre, c'est-à-dire qu'aucun rapport de vitesses de marche avant ou arrière de la boîte de vitesses n'est engagé.

Lorsque l'un des rapports de vitesses est engagé; la tige 3 du levier 1 occupe une position inclinée telle que le faisceau infrarouge de l'émetteur 4 est reçu par le récepteur 6 qui fournit alors un signal électrique au circuit électronique pour que ce dernier puisse indiquer que le levier occupe une position de sélection de fonctionnement en marche du véhicule correspondant au rapport engagé sur la boîte de vitesses.

En outre, si le rapport engagé est la marche arrière, le contacteur de signaux de recul fournira au circuit électronique un signal qui, combiné au signal de récepteur 6, amènera le circuit électronique à fournir sur sa sortie un signal indiquant que le rapport engagé est la marche arrière.

Par ailleurs, le circuit électronique peut diagnostiquer un défaut de fonctionnement du dispositif, c'est-à-dire de l'émetteur 4 ou du récepteur 6 ou du contacteur du feu de recul du véhicule dans le cas où le récepteur infrarouge 6 ne reçoit pas le faisceau infrarouge de l'émetteur 4 et le contacteur du feu de recul est actionné.

Avantageusement, le circuit électronique peut être constitué par le calculateur de bord du véhicule commandant l'affichage présent au tableau de bord pour indiquer au conducteur le sens de roulage sélectionné de son véhicule.

## Revendications

1. Dispositif permettant de déterminer le sens de roulage sélectionné d'un véhicule automobile, dépendant du rapport engagé sur une boîte de vitesses mécanique du véhicule à partir de la position d'un levier de changement de vitesses (1), ce dispositif comprenant un émetteur (4) de faisceau infrarouge et un récepteur (6) du faisceau infrarouge émis par l'émetteur (4), **caractérisé en ce que** l'émetteur et le récepteur (6) sont disposés relativement au levier de changement de vitesses (1) de façon que la réception du faisceau infrarouge par le récepteur (6) soit interrompue par le levier (1) en position de sélection neutre de celui-ci et que le récepteur (6) reçoive le faisceau infrarouge à toute autre position de sélection de fonctionnement en marche de ce levier (1) correspondant à un rapport engagé sur la boîte de vitesses et un circuit électronique relié au récepteur et apte à fournir un signal indiquant si un rapport de vitesse est engagé ou non suivant que le récepteur a reçu ou non le faisceau infrarouge.

2. Dispositif selon la revendication 1, **caractérisé en ce qu'**il comprend un contacteur de feu de recul du véhicule présent sur la boîte de vitesses et relié au circuit électronique de façon que ce dernier puisse fournir un signal d'information indiquant que le rapport engagé sur la boîte de vitesses est du type marche avant ou marche arrière suivant l'état du contacteur du feu de recul lorsque le récepteur (6) reçoit le faisceau infrarouge.

3. Dispositif selon la revendication 2, **caractérisé en ce que** le circuit électronique est également apte à fournir un signal d'information indiquant un défaut de fonctionnement de l'émetteur (4) ou du récepteur infrarouge (6) ou du contacteur du feu de recul lorsque le circuit électronique ne reçoit pas de signal du récepteur infrarouge (6) et constate que le contacteur est actionné.

4. Dispositif selon l'une des revendications précédentes, **caractérisé en ce que** l'émetteur (4) et le récepteur infrarouge (6) sont fixés à des supports (7, 8) solidaires d'un boîtier (2) de réception de la partie inférieure d'articulation du levier de changement de vitesses (1) de façon à être disposés en alignement en regard l'un de l'autre suivant un axe situé dans un plan contenant l'axe du levier (1) lorsque ce dernier occupe sa position de sélection neutre.

5. Dispositif selon l'une des revendications 2 à 4, **caractérisé en ce que** le circuit électronique est un calculateur de bord du véhicule.

## Claims

1. A device which enables the selected direction of travel of an automobile vehicle to be determined, depending on the gear engaged in a mechanical gearbox of the vehicle, from the position of a gear shift lever (1), said device comprising an infrared beam emitter (4) and a receiver (6) of the infrared beam emitted by the emitter (4), **characterised in that** the emitter and the receiver (6) are disposed in relation to the gear shift lever (1) so that the reception of the infrared beam by the receiver (6) is interrupted by the lever (1) in the neutral selection position of the latter, and that the receiver (6) receives the infrared beam in any other gear operation selection position of said lever (1) corresponding to a gear engaged in the gearbox, and an electronic circuit is connected to the receiver and is capable of supplying a signal which indicates if a gear is engaged or not according to whether the receiver has or has not received the infrared beam.

2. A device according to claim 1, **characterised in that** it comprises a reversing light switch of the vehicle which is present in the gearbox and which is connected to the electronic circuit so that the latter is capable of supplying an information signal which indicates that the gear engaged in the gearbox is a forward or reverse gear according to the status of the reversing light switch when the receiver (6) receives the infrared beam.

3. A device according to claim 2, **characterised in that** the electronic circuit is also capable of supplying an information signal which indicates an operating defect of the emitter (4) or of the infrared receiver (6) or of the reversing light switch when the electronic circuit does not receive a signal from the infrared receiver (6) and determines that the switch is actuated.

4. A device according to any one of the preceding claims, **characterised in that** the emitter (4) and the infrared receiver (6) are fixed to supports (7, 8) which are integral with a reception housing (2) of the lower joint part of the gear shift lever (1) such that they are disposed in alignment with each other along an axis situated in a plane which contains the axis of the lever (1) when the latter occupies its neutral selection position.

5. A device according to any one of claims 2 to 4, **characterised in that** the electronic circuit is an on-board computer of the vehicle.

## Patentansprüche

1. Vorrichtung, die es erlaubt, die ausgewählte Fahrtrichtung eines Kraftfahrzeugs zu bestimmen, die von dem Gang abhängt, der auf einem mechanischen Schaltgetriebe des Fahrzeugs eingelegt ist, ausgehend von der Stellung eines Gangschalthebels (1), wobei diese Vorrichtung einen Sender (4) eines Infrarotstrahls und einen Empfänger (6) des vom Sender (4) gesendeten Infrarotstrahls umfasst, **dadurch gekennzeichnet, dass** der Sender (4) und der Empfänger (6) in Bezug auf den Gangschalthebel (1) so angeordnet sind, dass der Empfang des Infrarotstrahls durch den Empfänger (6) durch den Hebel (1) in dessen Leerlaufauswahlstellung unterbrochen wird, und so, dass der Empfänger (6) den Infrarotstrahl bei jeder anderen Betriebsauswahlstellung dieses Hebels (1) beim Fahren, die einem auf dem Schaltgetriebe eingelegten Gang entspricht, empfängt, und einen elektronischen Schaltkreis, der an den Empfänger angeschlossen ist und ein Signal liefern kann, das, in Abhängigkeit davon, ob der Empfänger den Infrarotstrahl empfangen hat oder nicht, anzeigt, ob ein Gang eingelegt ist oder nicht.

2. Vorrichtung nach Anspruch 1, **dadurch gekennzeichnet, dass** sie einen Rückfahrlichtschalter des Fahrzeugs umfasst, der auf dem Schaltgetriebe präsent und mit dem elektronischen Schaltkreis so verbunden ist, dass letzterer ein Informationssignal liefern kann, das anzeigt, dass der auf dem Schaltgetriebe eingelegte Gang je nach Zustand des Schalters des Rückfahrlichts, wenn der Empfänger (6) den Infrarotstrahl empfängt, des Typs Vorwärts- oder Rückwärtsfahren ist.

3. Vorrichtung nach Anspruch 2, **dadurch gekennzeichnet, dass** der elektronische Schaltkreis auch ein Informationssignal liefern kann, das einen Betriebsfehler des Senders (4) oder des Infrarotempfängers (6) oder des Rückfahrlichtschalters anzeigen kann, wenn der elektronische Schaltkreis vom Infrarotempfänger (6) kein Signal erhält und feststellt, dass der Schalter betätigt ist.

4. Vorrichtung nach einem der vorhergehenden Ansprüche, **dadurch gekennzeichnet, dass** der Sender (4) und der Infrarotempfänger (6) auf Trägem (7, 8) befestigt sind, die fest mit einem Gehäuse (2) zum Aufnehmen des unteren Gelenkteils des Gangschalthebels (1) so verbunden sind, dass sie gefluchtet einer dem anderen gegenüber gemäß einer Achse angeordnet sind, die in einer Ebene liegt, die die Achse des Hebels (1) enthält, wenn letzterer seine Leerlaufauswahlstellung einnimmt.

5. Vorrichtung nach einem der Ansprüche 2 bis 4, **dadurch gekennzeichnet, dass** der elektronische Schaltkreis ein Bordrechner des Fahrzeugs ist.
